# EUROPEAN PATENT SPECIFICATION

(11) **EP 0 289 077 B1**
(45) Date of publication and mention of the grant of the patent: **30.06.1993**
(21) Application number: 88200744.6
(22) Date of filing: 19.04.1988
(51) Int. Cl.: C08K 5/13, C08L 73/00

(54) **Thermostabilized copolymer composition**
Wärmestabilisierte Copolymerzusammensetzung
Composition de copolymère stabilisée thermiquement

(30) Priority: 29.04.1987 GB 8710171
(43) Date of publication of application: 02.11.1988
(73) Proprietor: SHELL INTERNATIONALE RESEARCH MAATSCHAPPIJ B.V., 2596 HR Den Haag (NL)
(72) Inventor: Schmitter, André, Dr., F-68220 Hegenheim (FR)

(56) References cited:
- EP-A- 0 094 092
- EP-A- 0 209 127
- US-A- 3 878 149
- US-A- 3 929 727
- US-A- 3 948 832
- US-A- 3 968 082
- US-A- 4 120 846
- US-A- 4 139 522

## Description

The present invention relates to copolymer compositions comprising certain additives. The relevant copolymers are characterized by having an alternating structure [A-CO]ₙ in which A is a unit derived from an olefinically unsaturated compound. The term "copolymer" includes terpolymers in which different units A are present. As an example of suitable terpolymers reference is made to a copolymer of ethylene, carbon monoxide and propylene or butylene.

The relevant alternating copolymers and their methods of preparation are known per se, cf US-A 3 694 412, EP-A 121 965 and EP-A 181 014. Whilst these copolymers have attractive physical and mechanical properties such as yield stress, tensile strength, impact strength and flexural modulus, their processing stability and long-life or end-use stability leave room for improvement.

Applicants have found that a very large number of commercial thermostabilizers that perform well in polyamides, polyolefins, polyacrylates, polystyrenes and various other commodity thermoplastics and engineering thermoplastics fail to achieve adequate thermostabilization of alternating ethylene/carbon monoxide copolymers. It is therefore surprising to find that a few small groups of narrowly defined additives have been found that do produce the desired thermostabilizing improvement.

The present invention provides stabilized copolymer compositions comprising an alternating copolymer of carbon monoxide and an olefinically unsaturated compound and from 0.03 to 5.0 %w of an additive selected from
a) phenolic dicarboxylates having the general formula 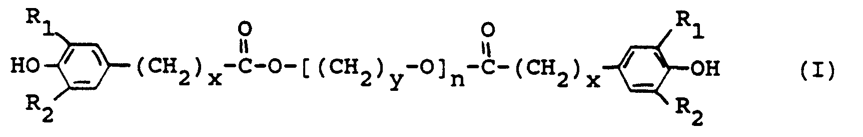 in which
   x is 0 to 4, preferably 2
   y is 2 to 6, preferably 2 or 3
   n is 2 to 8, preferably 3
   R₁ is hydrogen or alkyl with 1 to 6 carbon atoms
   R₂ is alkyl with 1 to 6 carbon atoms.
b) phenolic dicarboxylates having the general formula 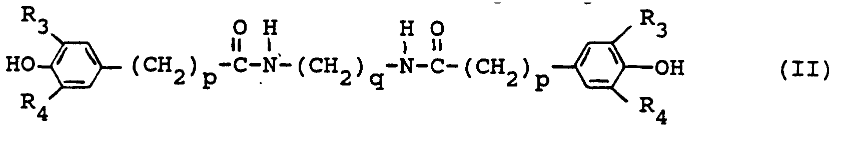 in which
   p is 0 to 6, preferably 2
   q is 0 to 12, preferably 0 or 6
   R₃ is hydrogen or alkyl with from 1 to 6 carbon atoms
   R₄ is alkyl with from 1 to 6 carbon atoms, optionally together with
c) phenolic dicarboxylates having the general formula 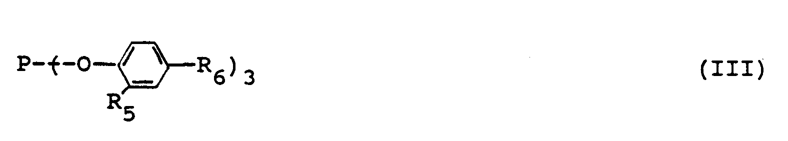 in which
   R₅ is alkyl with from 1 to 6 carbon atoms and
   R₆ is hydrogen or alkyl with from 1 to 6 carbon atoms

Suitable phenolic dicarboxylates are:
diethylene glycol bis(2-[3,5-diethyl-4-hydroxyphenyl] ethanoate); diethylene glycol bis(5-[3-isobutyl-4-hydroxyphenyl] pentanoate);
triethylene glycol bis(3-[3,5-di-tert.butyl-4-hydroxyphenyl] propanoate);
octaethylene glycol bis(2-[3,5-di-tert.amyl-4-hydroxyphenyl] ethanoate);
dipropylene glycol bis(3-[3,5-di-sec.butyl-4-hydroxyphenyl] propanoate);
tripropylene glycol bis(3-[3,5-di-tert.butyl-4-hydroxyphenyl] propanoate);
tetrapropylene glycol bis(3-sec.pentyl-4-hydroxy-benzoate);
tributylene glycol bis(3-ethyl-5-tert.butyl-4-hydroxybenzoate);
dipentylene glycol bis(2-[3-isopropyl-5-tert.amyl-4-hydroxyphenyl] ethanoate);
dihexylene glycol bis(4-[3-cyclohexyl-4-hydroxyphenyl] butanoate); and the like. Preference is given to additives in which R₂ is an alkyl group that cause steric hindrance, e.g. isopropyl, t-butyl or t-amyl. In even more preferred additives each of R₁ and R₂ is a sterically hindering alkyl group. Most preferred phenolic dicarboxylates are triethylene glycol bis(3-[3,5-di-tert.butyl-4-hydroxyphenyl] propanoate) and, tripropylene glycol bis(3-[3,5-di-tert.butyl-4-hydroxyphenyl] propanoate).

Suitable phenolic dicarboxamides are:
N,N'-bis(3-[3,5-di-tert.butyl-4-hydroxyphenyl] propanoyl) hydrazine;
N,N'-bis(2-[3-methyl-5-tert.butyl-4-hydroxyphenyl] ethanoyl) hydrazine;
N,N'-bis(3,5-isopropyl-4-hydroxybenzoyl) hydrazine;
1,1-bis(3-[3,5-di-isopropyl-4-hydroxyphenyl] propanamido) methane;
1,3-bis(4-[3-{1-methy!-cyc!openty!}-4-hydroxypheny!] butanamido) propane; 1,5-bis(5-[3-isobutyl-4-hydroxyphenyl] pentanamido) pentane; 1,6-bis(3-sec.pentyl-4-hydroxybenzamido) hexane;
1,6-bis(3-[3,5-di-tert.butyl-4-hydroxyphenyl] propanamido) hexane;
1,8-bis(6-[3-ethyl-5-tert.butyl-4-hydroxyphenyl] hexanamido) octane;
1,12-bis(2-[3,5-diethyl-4-hydroxyphenyl] ethanamido) dodecane; and the like. Preference is given to additives in which R₄ is an alkyl group that cause steric hindrance, e.g. isopropyl, t-butyl or t-amyl. In even more preferred additives each of R₃ and R₄ is a sterically hindering alkyl group. Most preferred phenolic dicarboxamides are N,N'-bis(3-[3,5-di-tert.butyl-4-hydroxyphenyl] propanoyl) hydrazine, and 1,6-bis(3-[3,5-di-tert.butyl-4-hydroxyphenyl] propanamido) hexane.

Suitable phenolic phosphites are:
tris(2-tert.butylphenyl) phosphite;
tris(2-tert.amylphenyl) phosphite;
tris(2,4-diethylphenyl) phosphite;
tris(2-tert.amyl-4-tert.butylphenyl) phosphite;
tris(2,4-di-isopropylphenyl) phosphite;
tris(2-isopropyl-4-tert.butylphenyl) phosphite;
tris(4-tert.butyl-2-isopropylphenyl) phosphite;
tris(2-[1-methyl-cyclopentyl] phenyl) phosphite;
tris(2-methyl-4-tert.butylphenyl) phosphite;
tris(2,4-di-tert.butylphenyl) phosphite; and the like. Preference is given to additives in which R₅ is an alkyl group that cause steric hindrance, e.g. isopropyl, t-butyl or t-amyl. In even more preferred additives each of R₅ and R₆ is a sterically hindering alkyl group. Most preferred phenolic phosphite is tris(2-tert.butylphenyl) phosphite.

When selecting a phenolic dicarboxamide in which q is 5 to 7, it is beneficial to employ such additive in admixture with a phenolic phosphite, preferably in such a mixture the phenolic dicarboxamide and phenolic phosphite are present in about equal weight proportions, i.e. 1 pbw of a phenolic dicarboxamide per 0.8 to 1.2 pbw of a phenolic phosphite.

The additive can be added to the copolymer by conventional methods suitable for producing an intimate mixture of the copolymer and the additive without unduly degrading the copolymer or the additive. Such methods include dry blending of the additive and the copolymer in the finely divided form followed by hot pressing, coextrusion of the copolymer and the additive to thereby produce a stabilized composition as an extrudate, or by intimately mixing in a mixer or blender employing high shear.

The best mode of operating this invention is elucidated in the Example disclosed hereinafter.

Preferred copolymers are those having a weight molecular weight of at least 2000, better still, at least 6000.

The improved compositions of this invention can be processed into articles of manufacture such as fibres, sheets, films, laminates, containers, tubes, piping and articles having an intricate shape by conventional processing techniques such as melt-spinning, extrusion, coextrusion, blow-moulding, compression-moulding, injection-moulding and solid phase pressure forming. The invention is of special importance to melt-spinning, extrusion and coextrusion applications. In addition, it is of special importance to all those applications where adequate long-life stability of finished articles of manufacture is essential.

### EXAMPLE

The following additives were tested on their thermostabilizing performance:
1) triethyleneglycol bis(3-[3,5-di-tert.butyl-4-hydroxyphenyl] propanoate),
2) N,N'-bis(3-[3,5-di-tert.butyl-4-hydroxyphenyl] propanoyl) hydrazine,
3) 1,6-bis(3-[3,5-di-tert.butyl-4-hydroxyphenyl] propanamido) hexane,
4) tris(2,4-di-tert.butylphenyl) phosphite,
5)^{*} octadecyl 3-(3,5-di-tert.butyl-4-hydroxyphenyl) propanoate,
6)^{*} pentaerythrityl tetra(3-[3,5-di-tert.butyl-4-hydroxyphenyl] propanoate).

Test specimen having a length of 30 mm and a width of 3 mm were cut from a sheet which was prepared by compression-moulding at 250 _{°} C from an ethylene/propylene/carbon monoxide terpolymer having an alternating structure, a crystalline melting point of 218 ° C and an intrinsic viscosity of 1.6 dl/g (measured in meta-crysol at 60 _{°} C).

The test specimen were subjected to aerobic oven aging tests at various temperatures, marked in the Table below. All specimen were bent by hand at an angle of 180 and the appearance of cracks was recorded as brittleness (failure). Time of heating in the oven to reach the moment of failure was determined.

Additives 1, 2 and 6 were employed in an amount of 0.5 %wt, additive 5 was employed in an amount of 0.3 %wt and additives 3 and 4 were employed as a mixture, each component being used in a concentration of 0.25 %w on the weight of the copolymer.

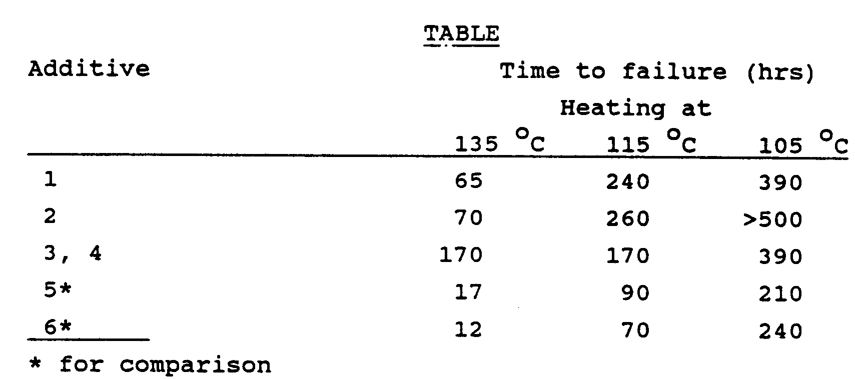

The table shows that additives 5 and 6 which are commercial top quality single thermostabilizers for polyethylenes, polypropylenes and polyamides completely fail to show an attractive performance, and since the polymer degradation mechanism of the relevant ethylene/carbon monoxide copolymers used in this invention and the physico-chemical behaviour of the additives in the copolymers are not known there is no way of predicting the favourable results obtained with the additives used in this invention.

Results at best similar to, but mostly inferior to those reported for the comparative additives in the Table hereinabove were obtained when testing many other commercial thermostabilizers for thermoplastics.

## Claims (Claims for the following Contracting State(s) : AT, BE, CH, DE, FR, GB, IT, LI, NL, SE)

1. A stabilized composition comprising an alternating copolymer of carbon monoxide and an olefinically unsaturated compound and, based on the weight of the copolymer, from 0.03 to 5.0 %w of an additive selected from
a) phenolic dicarboxylates having the general formula 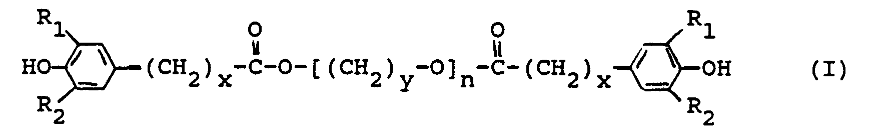 in which
x is 0 to 4
y is 2 to 6
n is 2 to 8
R₁ is hydrogen or alkyl with 1 to 6 carbon atoms
R₂ is alkyl with 1 to 6 carbon atoms.
b) phenolic dicarboxylates having the general formula 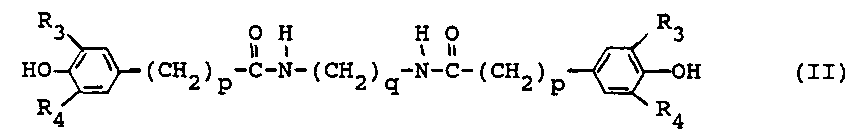 in which
p is 0 to 6
q is 0 to 12
R₃ is hydrogen or alkyl with from 1 to 6 carbon atoms
R₄ is alkyl with from 1 to 6 carbon atoms, optionally together with
c) phenolic dicarboxylates having the general formula 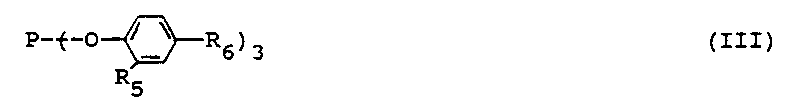 in which
R₅ is alkyl with from 1 to 6 carbon atoms and
R₆ is hydrogen or alkyl with from 1 to 6 carbon atoms.

2. A composition as claimed in claim 1 in which x is 2.

3. A composition as claimed in claim 1 or 2 in which y is 2 or 3.

4. A composition as claimed in any one of claims 1 to 3 in which n is 3.

5. A composition as claimed in any one of claims 1 to 4 in which p is 2.

6. A composition as claimed in any one of claims 1 to 5 in which q is 6 or 0.

7. A composition as claimed in any one of claims 1 to 6 in which R₂, R₄ and R₅ are alkyl groups causing steric hindrance.

8. A composition as claimed in any one of claims 1 to 7 in which Ri, R₃ and R₆ are alkyl groups causing steric hindrance.

9. A composition as claimed in any one of claim 1 or 5, which comprises a mixture of 1 pbw of a phenolic dicarboxamide selected from group b) and from 0.8 to 1.2 pbw of a phenolic phosphite selected from group c), q having a value of from 5 to 7.

10. A composition as claimed in any one of claims 1 to 9 in which the copolymer is a copolymer of ethylene and carbon monoxide.

11. A composition as claimed in any one of claims 1 to 9 in which the copolymer is a copolymer of ethylene, propylene and carbon monoxide.

## Claims (Claims for the following Contracting State(s) : ES)

1. A method for the preparation of a stabilized composition by adding to an alternating copolymer of carbon monoxide and an olefinically unsaturated compound, based on the weight of the copolymer, from 0.03 to 5.0 %w of an additive selected from
a) phenolic dicarboxylates having the general formula 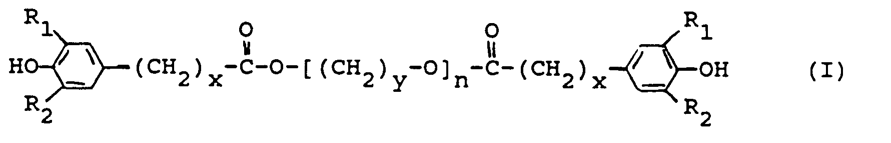 in which
x is 0 to 4
y is 2 to 6
n is 2 to 8
R₁ is hydrogen or alkyl with 1 to 6 carbon atoms
R₂ is alKyl with 1 to 6 carbon atoms.
b) phenolic dicarboxamides having the general formula 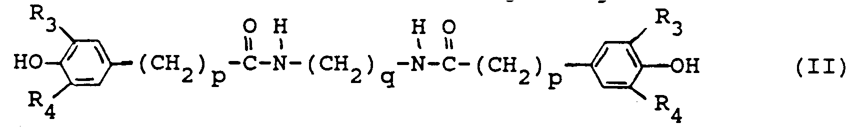 in which
p is 0 to 6
q is 0 to 12
R₃ is hydrogen or alkyl with from 1 to 6 carbon atoms
R₄ is alkyl with from 1 to 6 carbon atoms, optionally together with
c) phenolic phosphites having the general formula 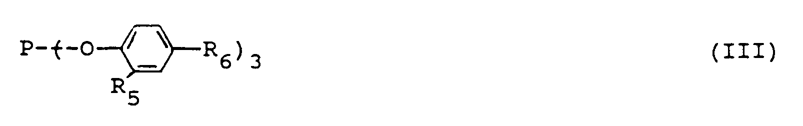 in which
R₅ is alkyl with from 1 to 6 carbon atoms and
R₆ is hydrogen or alkyl with from 1 to 6 carbon atoms.

2. A method as claimed in claim 1 in which x is 2.

3. A method as claimed in claim 1 or 2 in which y is 2 or 3.

4. A method as claimed in any one of claims 1 to 3 in which n is 3.

5. A method as claimed in any one of claims 1 to 4 in which p is 2.

6. A method as claimed in any one of claims 1 to 5 in which q is 6 or 0.

7. A method as claimed in any one of claims 1 to 6 in which R₂, R₄ and R₅ are alkyl groups causing steric hindrance.

8. A method as claimed in any one of claims 1 to 7 in which Ri, R₃ and R₆ are alkyl groups causing steric hindrance.

9. A method as claimed in claim 1 or 5, which comprises a mixture of 1 pbw of a phenolic dicarboxamide selected from group b) and from 0.8 to 1.2 pbw of a phenolic phosphite selected from group c), q having a value of from 5 to 7.

10. A method as claimed in any one of claims 1 to 9 in which the copolymer is a copolymer of ethylene and carbon monoxide.

11. A method as claimed in any one of claims 1 to 9 in which the copolymer is a copolymer of ethylene, propylene and carbon monoxide.

## Patentansprüche (Patentansprüche für folgende(n) Vertragsstaat(en) : AT, BE, CH, DE, FR, GB, IT, LI, NL, SE)

1. Stabilisierte Zusammensetzung mit einem Gehalt an einem alternierenden Copolymer aus Kohlenmonoxid und einer olefinisch ungesättigten Verbindung und 0,03 bis 5,0 Gew.-%, bezogen auf das Gewicht des Copolymers, eines Additivs, ausgewahlt unter
a) phenolischen Dicarboxylaten mit der allgemeinen Formel 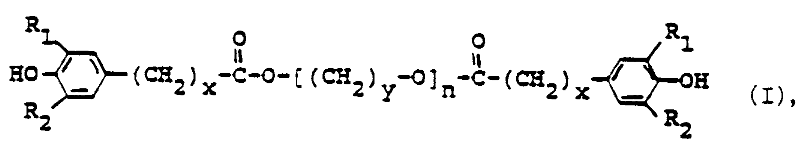 worin
x für 0 bis 4 steht,
y den Wert 2 bis 6 hat,
n den Wert 2 bis 8 aufweist,
R₁ Wasserstoff oder Alkyl mit 1 bis 6 Kohlenstoffatomen bedeutet und
R₂ für Alkyl mit 1 bis 6 Kohlenstoffatomen steht;
b) phenolischen Dicarboxamiden mit der allgemeinen Formel 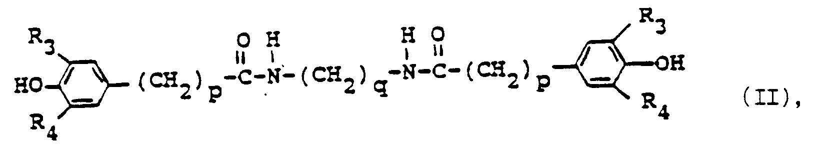 worin
P für 0 bis 6 steht,
q den Wert 0 bis 12 hat,
R₃ Wasserstoff oder Alkyl mit 1 bis 6 Kohlenstoffatomen bedeutet und
R₄ Alkyl mit 1 bis 6 Kohlenstoffatomen darstellt, gegebenenfalls zusammen mit
c) phenolischen Phosphiten mit der allgemeinen Formel 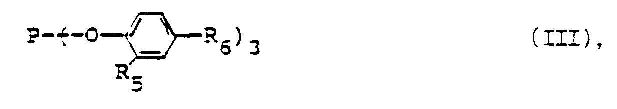 worin
R₅ Alkyl mit 1 bis 6 Kohlenstoffatomen bedeutet und
R₆ Wasserstoff oder Alkyl mit 1 bis 6 Kohlenstoffatomen darstellt.

2. Zusammensetzung nach Anspruch 1, worin x den Wert 2 hat.

3. Zusammensetzung nach Anspruch 1 oder 2, worin y den Wert 2 oder 3 hat.

4. Zusammensetzung nach einem der Ansprüche 1 bis 3, worin n den Wert 3 hat.

5. Zusammensetzung nach einemer Ansprüche 2 bis 4, worin p den Wert 2 hat.

6. Zusammensetzung nach einem der Ansprüche 1 bis 5, worin q den Wert 6 oder 0 hat.

7. Zusammensetzung nach einem der Ansprüche 1 bis 6, worin R₂, R₄ und R₅ Alkylgruppen sind, die eine sterische Hinderung hervorrufen.

8. Zusammensetzung nach einem der Ansprüche 1 bis 7, worin Ri, R₃ und R₆ Alkylgruppen sind, die eine sterische Hinderung hervorrufen.

9. Zusammensetzung nach Anspruch 1 oder 5, welche ein Gemisch aus 1 Gewichtsteil eines aus der Gruppe b) ausgewahlten phenolischen Dicarboxamids mit 0,8 bis 1,2 Gewichtsteilen eines aus Gruppe c) ausgewahlten phenolischen Phosphits umfaßt, wobei q einen Wert von 5 bis 7 hat.

10. Zusammensetzung nach einem der Ansprüche 1 bis 9, worin das Copolymer ein Copolymer aus Ethylen und Kohlenmonoxid ist.

11. Zusammensetzung nach einem der Ansprüche 1 bis 9, worin das Copolymer ein Copolymer aus Ethylen, Propylen und Kohlenmonoxid ist.

## Patentansprüche (Patentansprüche für folgende(n) Vertragsstaat(en) : ES)

1. Verfahren zur Herstellung einer stabilisierten Zusammensetzung durch Zusetzen zu einem alternierenden Copolymer aus Kohlenmonoxid und einer olefinisch ungesättigten Verbindung von 0,03 bis 5,0 Gew.-%, bezogen das Gewicht des Copolymers, eines Additivs, ausgewählt unter
a) phenolischen Dicarboxylaten mit der allgemeinen Formel 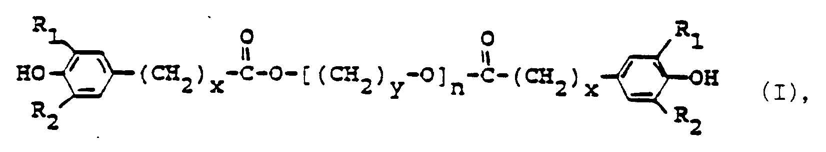 worin
x für 0 bis 4 steht,
y den Wert 2 bis 6 hat,
n den Wert 2 bis 8 aufweist,
R₁ Wasserstoff oder Alkyl mit 1 bis 6 Kohlenstoffatomen bedeutet und
R₂ für Alkyl mit 1 bis 6 Kohlenstoffatomen steht;
b) phenolischen Dicarboxamiden mit der allgemeinen Formel 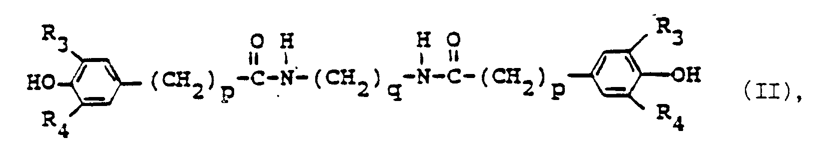 worin
p für 0 bis 6 steht,
q den Wert 0 bis 12 hat,
R₃ Wasserstoff oder Alkyl mit 1 bis 6 Kohlenstoffatomen bedeutet und
R₄ Alkyl mit 1 bis 6 Kohlenstoffatomen darstellt, gegebenenfalls zusammen mit
c) phenolischen Phosphiten mit der allgemeinen Formel 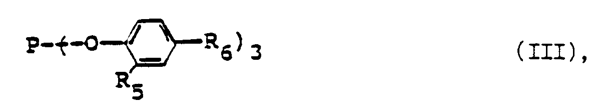 worin
R₅ Alkyl mit 1 bis 6 Kohlenstoffatomen bedeutet und
R₆ Wasserstoff oder Alkyl mit 1 bis 6 Kohlenstoffatomen darstellt.

2. Verfahren nach Anspruch 1, worin x den Wert 2 hat.

3. Verfahren nach Anspruch 1 oder 2, worin y den Wert 2 oder 3 hat.

4. Verfahren nach einem der Ansprüche 1 bis 3, worin n den Wert 3 hat.

5. Verfahren nach einem der Ansprüche 2 bis 4, worin p den Wert 2 hat.

6. Verfahren nach einem der Ansprüche 1 bis 5, worin q den Wert 6 oder 0 hat.

7. Verfahren nach einem der Ansprüche 1 bis 6, worin R₂, R₄ und R₅ Alkylgruppen sind, die eine sterische Hinderung hervorrufen.

8. Verfahren nach einem der Ansprüche 1 bis 7, worin Ri, R₃ und R₆ Alkylgruppen sind, die eine sterische Hinderung hervorrufen.

9. Verfahren nach Anspruch 1 oder 5, welches ein Gemisch aus 1 Gewichtsteil eines aus der Gruppe b) ausgewählten phenolischen Dicarboxamids mit 0,8 bis 1,2 Gewichtsteilen eines aus Gruppe c) ausgewählten phenolischen Phosphits umfaßt, wobei q einen Wert von 5 bis 7 hat.

10. Verfahren nach einem der Ansprüche 1 bis 9, worin das Copolymer ein Copolymer aus Ethylen und Kohlenmonoxid ist.

11. Verfahren nach einem der Ansprüche 1 bis 9, worin das Copolymer ein Copolymer aus Ethylen, Propylen und Kohlenmonoxid ist.

## Revendications (Revendications pour l'(les) Etat(s) contractant(s) suivant(s) : AT, BE, CH, DE, FR, GB, IT, LI, NL, SE)

1. Une composition stabilisée comprenant un copolymère alterné d'oxyde de carbone et d'un composé oléfiniquement insaturé et, par rapport au poids du copolymère, de 0,03 à 5,0 % en poids d'un additif choisi parmi
a) des dicarboxylates phénoliques ayant la formule générale 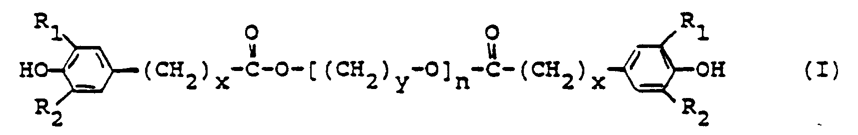 dans laquelle
x est un nombre de 0 à 4,
y est un nombre de 2 à 6,
n est un nombre de 2 à 8,
R₁ est de l'hydrogène ou un groupe alcoyle de 1 à 6 atomes de carbone,
R₂ est un groupe alcoyle de 1 à 6 atomes de carbone
b) des dicarboxamides phénoliques ayant la formule générale 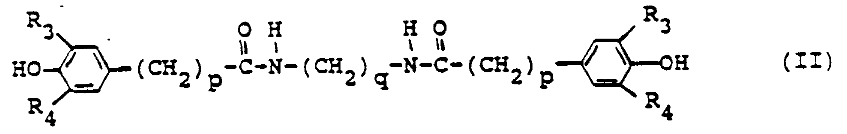 dans laquelle
p est un nombre de 0 à 6,
q est un nombre de 0 à 12,
R₃ est de l'hydrogène ou un groupe alcoyle de 1 à 6 atomes de carbone,
R₄ est un groupe alcoyle de 1 à 6 atomes de carbone, éventuellement en même temps que
c) des phosphites phénoliques ayant la formule générale 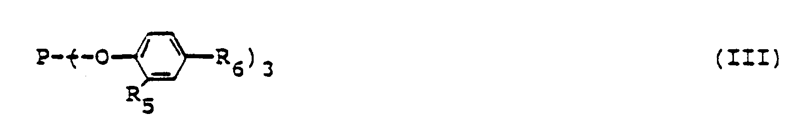 dans laquelle
R₅ est un groupe alcoyle de 1 à 6 atomes de carbone et
R₆ est de l'hydrogène ou un groupe alcoyle de 1 à 6 atomes de carbone.

2. Une composition selon la revendication 1, dans laquelle x est 2.

3. Une composition selon la revendication 1 ou 2, dans laquelle y est 2 ou 3.

4. Une composition selon l'une quelconque des revendications 1 à 3, dans laquelle n est 3.

5. Une composition selon l'une quelconque des revendications 1 à 4, dans laquelle p est 2.

6. Une composition selon l'une quelconque des revendications 1 à 5, dans laquelle q est 6 ou 0.

7. Une composition selon l'une quelconque des revendications 1 à 6, dans laquelle R₂, R₄ et R₅ sont des groupes alcoyle causant un empêchement stérique.

8. Une composition selon l'une quelconque des revendications 1 à 7, dans laquelle R₁, R₃ et R₆ sont des groupes alcoyle causant un empêchement stérique.

9. Une composition selon les revendications 1 ou 5, qui comprend un mélange de 1 partie en poids d'un dicarboxamide phénolique choisi dans le groupe b) et de 0,8 à 1,2 partie en poids d'un phosphite phénolique choisi dans le groupe c), q ayant une valeur de 5 à 7.

10. Une composition selon l'une quelconque des revendications 1 à 9, dans laquelle le copolymère est un copolymère d'éthylène et d'oxyde de carbone.

11. Une composition selon l'une quelconque des revendications 1 à 9, dans laquelle le copolymère est un copolymère d'éthylène, de propylène et d'oxyde de carbone.

## Revendications (Revendications pour l'(les) Etat(s) contractant(s) suivant(s) : ES)

1. Un procédé de préparation d'une composition stabilisée en ajoutant à un copolymère alterné d'oxyde de carbone et d'un composé oléfiniquement insaturé, par rapport au poids du copolymère, de 0,03 à 5,0 % en poids d'un additif choisi parmi
a) des dicarboxylates phénoliques ayant la formule générale 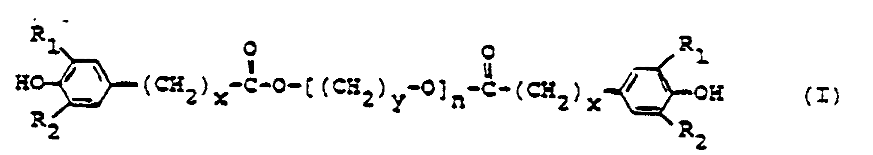 dans laquelle
x est un nombre de 0 à 4,
y est un nombre de 2 à 6,
n est un nombre de 2 à 8,
R₁ est de l'hydrogène ou un groupe alcoyle de 1 à 6 atomes de carbone,
R₂ est un groupe alcoyle de 1 à 6 atomes de carbone,
b) des dicarboxamides phénoliques ayant la formule générale 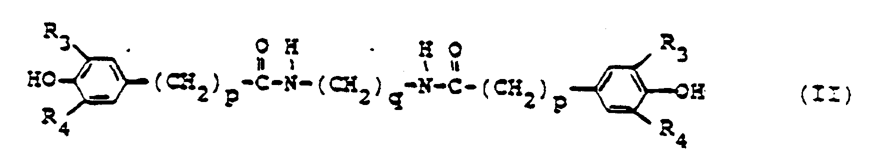 dans laquelle
p est un nombre de 0 à 6,
q est un nombre de 0 à 12,
R₃ est de l'hydrogène ou un groupe alcoyle de 1 à 6 atomes de carbone,
R₄ est un groupe alcoyle de 1 à 6 atomes de carbone, éventuellement en même temps que
c) des phosphites phénoliques ayant la formule générale 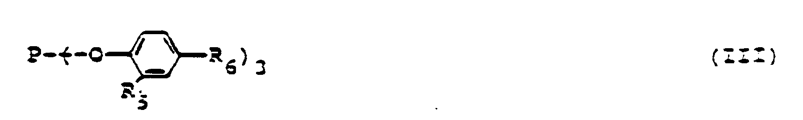 dans laquelle
R₅ est un groupe alcoyle de 1 à 6 atomes de carbone et
R₆ est de l'hydrogène ou un groupe alcoyle de 1 à 6 atomes de carbone.

2. Un procédé selon la revendication 1, dans lequel x est 2.

3. Un procédé selon la revendication 1 ou 2, dans lequel y est 2 ou 3.

4. Un procédé selon l'une quelconque des revendications 1 à 3, dans lequel n est 3.

5. Un procédé selon l'une quelconque des revendications 1 à 4, dans lequel p est 2.

6. Un procédé selon l'une quelconque des revendications 1 à 5, dans lequel q est 6 ou 0.

7. Un procédé selon l'une quelconque des revendications 1 à 6, dans lequel R₂, R₄ et R₅ sont des groupes alcoyle causant un empêchement stérique.

8. Un procédé selon l'une quelconque des revendications 1 a 7, dans lequel Ri, R₃ et R₆ sont des groupes alcoyle causant un empêchement stérique.

9. Un procédé selon la revendication 1 ou 5, qui comprend un mélange de 1 partie en poids d'un dicarboxamide phénolique choisi dans le groupe b) et de 0,8 à 1,2 partie en poids d'un phosphite phénolique choisi dans le groupe c), q ayant une valeur de 5 à 7.

10. Un procédé selon l'une quelconque des revendications 1 à 9, dans lequel le copolymère est un copolymère d'éthylène et d'oxyde de carbone.

11. Un procédé selon l'une quelconque des revendications 1 à 9, dans lequel le copolymère est un copolymère de propylène et d'oxyde de carbone.
